# EUROPEAN PATENT SPECIFICATION

(11) **EP 1 971 528 B1**
(45) Date of publication and mention of the grant of the patent: **15.08.2012**
(21) Application number: 06840131.4
(22) Date of filing: 06.12.2006
(51) Int. Cl.: B65D 25/10

(54) **CONTAINER WITH REMOVABLE BASE**
BEHÄLTER MIT ENTFERNBARER BASIS
CONTENANT A FOND AMOVIBLE

(30) Priority: 06.12.2005 US 742773 P
(43) Date of publication of application: 24.09.2008
(73) Proprietor: Atlas AGI Holdings, LLC, Greenwich CT 06830 (US)
(72) Inventor: MOWERY, Jeremy, D., Raleigh, NC 27604 (US); GELARDI, John, A., Kennebunkport, ME 04046 (US); LADWIG, David, P., Chicago, IL 60622 (US); MANKOFF, Gary, Raleigh, NC 27606 (US)
(74) Representative: Coulson, Elizabeth Eve
(86) International application number: PCT/US2006/061698
(87) International publication number: WO 2007/067931

(56) References cited:
- CA-A1- 2 424 494
- US-A1- 4 779 732
- US-A1- 5 046 615

## Description

### CROSS REFERENCE TO RELATED APPLICATIONS

This application claims priority to U.S. Provisional Application No. 60/742,773, filed December 6, 2005.

### TECHNICAL FIELD

This invention relates generally to containers and, more specifically, to containers with removable bases.

### DESCRIPTION OF THE RELATED ART

A container that includes a lock and release mechanism is desirable in many applications. The lock and release mechanism keeps the container locked in a closed condition unless a release mechanism is triggered to open the container. Thus, the container provides child resistance or is otherwise not inadvertently opened to allow access to the products contained therein.

Many of the known lock and release mechanisms are overly complex so as to require multiple parts and/or difficult manufacturing processes. The additional costs associated with such a lock and release mechanism can be substantial with respect to high volume productions. In addition, certain of the previous lock and release mechanisms can be manipulated to open the container without properly triggering the release mechanism.

In addition, the ability of a package to stand upright is a feature that is useful in stocking and displaying items in a store or warehouse. One type of package that is in common use today is the clamshell package. Clamshell packages are desirable because, amongst other reasons, they are formed in a single piece of a clear material that makes their contents easy to view, and they are made of tough plastic material that provides a high degree of security. However, they are typically sealed around all the edges in such a manner as to form a frame, which prohibits the ability of the package to stand upright.

Further, many packages must be destroyed in order to access the contents, as is typically necessary with clamshell packages. Such destruction of the original package is irrational and wasteful when it is often a benefit for the end user to continue to store and protect the article in the original container.

US Patent Number 4,779,732 discloses a container, for media discs, having a number of grooves formed therein, into which the media discs are locatable. The security with which these articles are located, however, is dependent upon a force exerted upon the peripheral edge surfaces of those articles by diametrically opposed indentations in the top and bottom parts thereof. Thus, when opened, the container ceases to reliably retain the article in the grooves.

Therefore, an unaddressed need exists in the industry to address the aforementioned deficiencies and inadequacies. What is needed is a reusable container that includes an effective lock and release mechanism, which is also simple to use and easy to manufacture.

### Brief Summary of Invention

A first aspect of the invention provides an apparatus for holding at least one article, comprising: a sleeve; a top located at one end of said sleeve; a base located at an end of said sleeve opposite said top; a locking mechanism that releaseably engages said sleeve to said base; which base comprises a first support structure comprising at least one article receiving recess formed from a first wall and a second wall, connected to one another between adjacent first ends thereof, said first wall comprising a flexing arm, and characterised in that said flexing arm has a cantilever that extends into the article receiving recess to terminate in a free end proximate said first end of said first wall, the cantilever being deflectable by the insertion of an article into the article receiving recess, and thereafter pressing a portion of that article against the second wall to retain that article in the article receiving recess.

Preferably, said at least one article receiving recess comprises two or more grooves that are evenly spaced along a sloping top wall of said base such that articles received in those recesses are held in a stepped fashion.

Preferably, there further comprises a second support structure extending from at least one of said top and said sleeve, configured to contact said article at a second location, which second location is spaced from said first location.

Preferably, said second support structure comprises a fin that provides means for supporting said articles at said second location.

Preferably, an edge of said fin comprises peaks and valleys that are stepped so as to correspond to the aforementioned grooves.

Preferably, said flexing arm is formed by a substantially U-shaped channel or cut extending through a side wall of said the or each article receiving recess.

Preferably, said flexing arm comprises a detent that contacts a surface of said article, when said article is inserted into the article receiving recess.

Preferably, wherein said article is a media disc, such as a CD or DVD, and wherein said arm contacts said surface at a non-optical portion of that disc, when present.

Preferably, said sleeve further comprises an aperture that engages said locking mechanism.

Preferably, said base comprises a cantilever defined in a front wall thereof which cantilever comprises a detent that is receivable within an aperture formed in said sleeve thereby to releasably engage the sleeve and the base.

Preferably, said first support structure is loaded with one or more articles, and wherein said top, sleeve and base are engaged with one another to form a package.

A second aspect of the invention provides a kit of parts for forming a package, which kit comprises: a sleeve; a top locatable at one end of said sleeve; a base locatable at an end of said sleeve opposite said top; a locking mechanism that is operable to releaseably engage said sleeve to said base; said base comprising a first support structure comprising at least one article receiving recess, said first wall comprising a flexing arm characterised in that said flexing arm has a cantilever that extends into the article receiving recess to terminate in a free end proximate said first end of said first wall, the cantilever being deflectable by the insertion of an article into the article receiving recess, and thereafter pressing a portion of that article against the second wall to retain that article in the article receiving recess.

Preferably, the cantilevered arm is formed by a substantially U-shaped channel or cut extending through a side wall of said the or each article receiving recess.

Preferably, the cantilevered arm comprises a detent that contacts a surface of said article, when said article is inserted into the article receiving recess.

### BRIEF DESCRIPTION OF THE DRAWINGS

**FIG. 1** is a perspective view of an exemplary embodiment of a container with a removable base, according to the present invention.
**FIG. 2** is a partially exploded view of the container of **FIG. 1****,** the base being removed from the container.
**FIG. 3** is a perspective view of the base of the container of **FIG. 1****.**
**FIG. 4** is a perspective view of an alternative embodiment of a container with a removable base, according to the present invention.
**FIG. 5** is a sectional perspective view of an alternative embodiment of a removable base.

### DETAILED DESCRIPTION

As required, detailed embodiments of the present invention are disclosed herein. It must be understood that the disclosed embodiments are merely exemplary of the invention that may be embodied in various and alternative forms, and combinations thereof. As used herein, the word "exemplary" is used expansively to refer to embodiments that serve as illustrations, specimens, models, or patterns. The figures are not necessarily to scale and some features may be exaggerated or minimized to show details of particular components. In other instances, well-known components, systems, materials, or methods have not been described in detail in order to avoid obscuring the present invention Therefore, specific structural and functional details disclosed herein are not to be interpreted as limiting, but merely as a basis for the claims and as a representative basis for teaching one skilled in the art to variously employ the present invention.

Referring now to the drawings in which like numerals indicate like elements throughout the several views, the drawings illustrate certain of the various aspects of exemplary embodiments of a container, case, or package with a removable base or base end cap. Generally described, the exemplary container includes a tubular sleeve with a top end cap and a removable base end cap, wherein the removable base end cap can be releasably secured to the tubular sleeve by means for releasably securing. For purposes of the present teaching, the terms "lower", "upper", "top", "base", and "bottom" are merely for the purpose of orientation and/or direction, and may thus be used interchangeably.

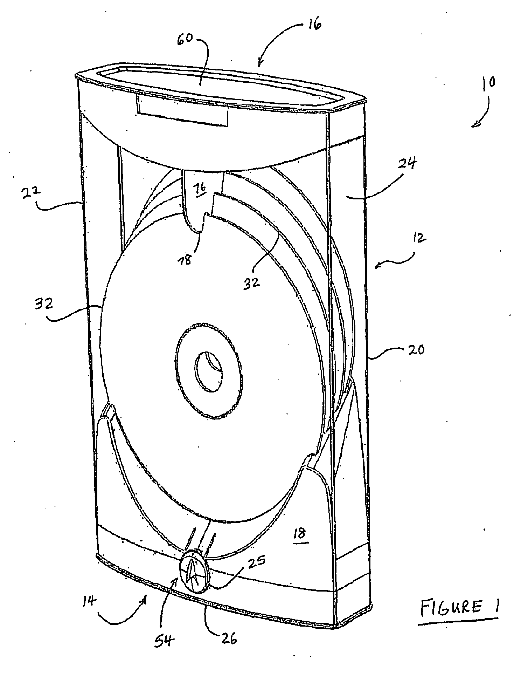

Referring to **FIG. 1****,** an exemplary embodiment of a container **10** includes a tubular sleeve **12,** a base end cap **14,** and a top end cap **16.** The dimensions and shape of the container, as well as the material used to form the container, are merely design decisions. The exemplary container **10** is dimensioned, shaped, and arranged for packaging discs, such as discs for storing computer readable media and the like. However, it should be understood that the container **g10** can be scaled or altered to package any article including healthcare and personal care products such as medical devices and perfume bottles, portable articles such as toys and electronic devices, etc.

The material for forming the container can be selected for aesthetic purposes. For example, the tubular sleeve of the container can be formed from a plastic that is transparent such that articles packaged in the container are viewable. Alternatively or additionally, the tubular sleeve can be formed from a material that is selected such that graphics can be printed thereon. Further, the material can be selected according to manufacturing constraints. As described in further detail below, the end caps of the container include elements that may be integral to, machined in, or attached to the end caps. Accordingly, the material for forming the end caps is merely a design decision.

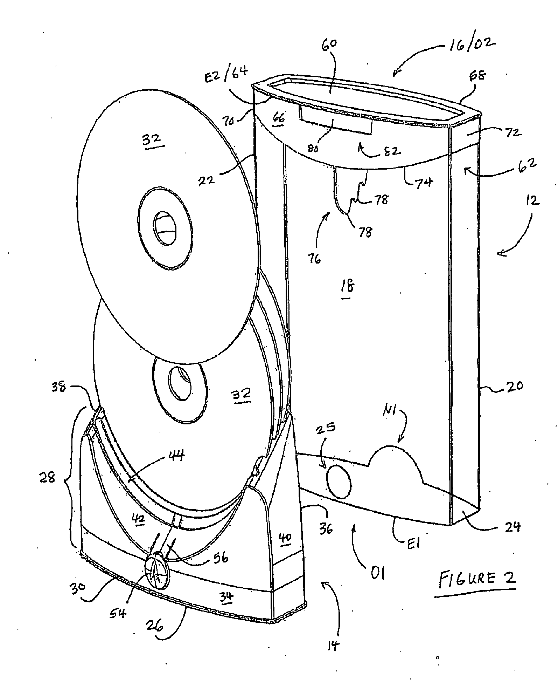

Referring to **FIGs. 1** and **2****,** the tubular sleeve **12** is defined by four walls and has a somewhat oval shaped, partially squared cross-section. The cross-sectional shape of the container can be determined according to the dimensions of the article or articles packaged therein or according to ergonomics, for example, to provide a container that is easily gripped.

The tubular sleeve **12** includes a front wall **18**, a back wall **20,** a first side wall **22**, and a second side wall **24**. The tubular sleeve **12** includes open ends **O1**, **O2** that are adjacent to lower and upper edges **E1**, **E2** of the tubular sleeve **12.** As described in further detail below, the open ends **O1**, **O2** of the tubular sleeve **12** receive the base end cap **14** and the top end cap **16**, respectively.

As shown in **FIG**. **2**, the tubular sleeve **12** further includes an aperture **25** that is disposed in the front wall **18** and a notch **N1** that is disposed in the back wall **20.** The aperture **25** is dimensioned and positioned to functionally align with elements of the base end cap **14** to releasably secure the base end cap **14** to the tubular sleeve **12** as the container **10** is assembled, as described in further detail below. The notch **N1** facilitates removal of the base end cap **14** from the tubular sleeve **12**, as described in further detail below.

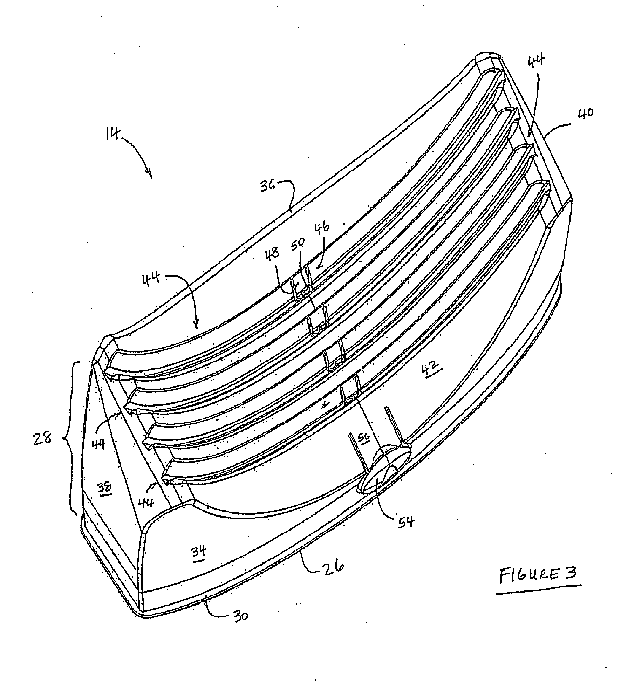

Referring to **FIGs. 1-3****,** the base end cap **14** is dimensioned and shaped to be received in the open end **01** of the tubular sleeve **12** and to at least partially support articles that are packaged in the container **10.** The base end cap **14** includes a bottom wall **26** and a lower support structure **28** that extends upwardly from the bottom wall **26.** The cross sectional area of the bottom wall **26** extends outside that of the lower support structure **28** such that the base end cap **14** includes a rim **30** that corresponds to the edge **E1,** as described in further detail below.

The lower support structure **28** is dimensioned and shaped to fit within or otherwise engage with the walls of the tubular sleeve **12**. The lower support structure **28** includes a front wall **34**, a back wall **36**, a first side wall **38**, a second side wall **40**, and a top wall **42**. The exemplary top wall **42** is shaped according to the curvature of a disc **32**. Specifically, the contour of the top wall **42** can be at least partially defined by the curvature of the edge of the disc **32** such that the discs **32** can easily be viewed and accessed when received and supported by the lower support structure **28**. Further, the top wall **42** slants upwardly from the front wall **34** toward the back wall **36**. In alternative embodiments, the top wall **42** is level so as to be substantially parallel with the bottom wall **26**, or slopes or curves in various directions and angles. Thus, it should be understood that the slant, slope, angle, or contour of the top wall **42** is merely a design decision.

The lower support structure **28** is dimensioned and shaped and/or includes elements that are dimensioned and positioned to provide means for supporting one or more articles. In the exemplary embodiment, the first support structure **28** includes recesses or grooves **44** to receive, support, and display a plurality of discs **32.** The grooves **44** are defined in the top wall **42** so as to extend between the first side wall **38** and the second side wall **40** and are evenly spaced along the sloped top wall **42,** between the front wall **34** and the back wall **36,** such that discs **32** that are received in the grooves **44** are displayed in a stepped fashion.

In the exemplary embodiment, means for retaining the discs **32** in the grooves **44** includes a flexing arm **46** that is disposed in each groove **44**. Each flexing arm **46** includes a cantilever **48** and a detent **50** disposed at the free end of the cantilever **48**. Each cantilever **48** can be formed by a substantially U-shaped channel or cut, that extends through a side wall of a respective groove **44**. Each flexing arm **46** is oriented such that the detent **50** is positioned to engage a non-optical portion of a disc **32** that is received in the groove **44** so as to not damage the digital contents of the disc **32**.

In the exemplary embodiment, means for releasably securing the base end cap **14** to the tubular sleeve **12** includes elements of the base end cap **14**, and specifically of the lower support structure **28**, that at least partially provide a lock and release mechanism. The lower support structure **28** includes a push button **54** that protrudes from the front wall **34**. The push button **54** is integral to and protrudes from the free end of a cantilever **56**. A cut line defines the cantilever **56** and the push button **54** from the top wall **42** and the front wall **34** such that the push button **54** can be displaced inwardly, as described in further detail below.

Referring to **FIGs. 1** and **2**, the top end cap **16** is dimensioned and shaped to be received in the open end **02** of the tubular sleeve **12** and to at least partially support articles that are packaged in the container **10**. The base end cap **14** includes a top wall **60** and an upper support structure 62 that extends downwardly from the top wall **60**. The cross sectional area of the top wall **60** extends outside that of the upper support structure **62** such that the base end cap **16** includes a rim **64** that corresponds to the edge **E2,** as described in further detail below.

The upper support structure **62** is dimensioned and shaped to fit within or otherwise engage the walls of the tubular sleeve **12.** The upper support structure **62** includes a front wall **66,** a back wall **68,** a first side wall **70,** a second side wall **72,** and a bottom wall **74.** The upper support structure **62** includes a fin **76** that provides means for supporting the upper edges of the discs **32.** The fin **76** extends downwardly from the bottom wall **74** and a lower edge of the fin **76** includes peaks and valleys **78** that are stepped so as to correspond to the grooves **44.**

Referring to **FIGs. 1** and **2****,** the container **10** can be assembled using the following non-limiting method that is presented for purposes of teaching. The top end cap **16** is received in the open end **02** of the tubular sleeve **12** and attached thereto. Specifically, the top end cap **16** is inserted into the open end **02** of the tubular sleeve **12** until the rim **64** contacts the top edge **E2** of the tubular sleeve **12.** Thereby, the elements of the top end cap **16** are properly positioned in the tubular sleeve **12.**

In the exemplary embodiment, the top end cap **16** is attached to the tubular sleeve **12** by tabs **80** that are disposed on the inside of the tubular sleeve **12** and recesses **82** disposed in the top end cap **16.** Each tab **80** is received in a respective recess **82** to attach the top end cap **16** to the tubular sleeve **12.** In alternative embodiments, the top end cap **16** is press fit into the open end **02** of the tubular sleeve **12** and/or the top end cap **16** is attached to the tubular sleeve **12** with adhesive, mechanical fasteners, a lid type arrangement, combinations thereof, and the like. In other alternative embodiments, the top end cap **16** may be integral to the tubular sleeve **12.** In still other alternative embodiments, the sleeve **12** is roughly trapezoidal in shape, having an open base end and a closed upper end such that there is no need for a top end cap.

The base end cap **14** is loaded with discs **32,** as shown in **FIGs. 1** and **2****,** such that each disc **32** is received and supported in a groove **44** and such that each disc **32** is retained in the groove **44** by means for retaining. Specifically, the edge of the disc **32** is engaged by a flexing arm **46.** As each disc **32** enters a groove **44,** the disc **32** contacts the detent **50** of the flexing arm **46** to deflect the cantilever **48** and displace the detent **50.** The deflected cantilever **48** thereafter holds the detent **50** against disc **32** such that the disc **32** is pressed between the detent **50** and a wall of the groove **44.**

The loaded base end cap **14** is received in the open end **01** of the tubular sleeve **12,** and is releasably secured thereto by means for releasably securing. In the exemplary embodiment, means for releasably securing includes the aperture **25** and the push button **54** that provide a lock and release mechanism.

The tubular sleeve **12** slides over the base end cap **14** until the edge **E1** of the tubular sleeve **12** contacts the rim **30** of the base end cap **14.** The push button **54** deflects inwardly to allow the tubular sleeve **12** to slide over the base end cap **14** and, as the edge **E1** and the rim **30** come into contact, the push button **54** functionally aligns with the aperture **25** and returns to an undeflected position. The push button **54** is thereby received in the aperture **25** such that the tubular sleeve **12** is releasably secured to the base end cap **14.** To release the tubular sleeve **12** from the base end cap **14,** the push button **54** can be depressed to inwardly deflect the cantilever **56** such that the tubular sleeve **12** can slide unobstructed over the base end cap **14** as the tubular sleeve **12** and the base end cap **14** are pulled from one another. The notch **N1** is provided to facilitate gripping the base end cap **14** to pull the base end cap **14** from the tubular sleeve **12.**

The container **10** is thereby fully assembled as shown in **FIG. 1****.** It should be noted that, as the end caps **14, 16** are received in the open ends **01, 02** of the tubular sleeve **12,** the bottom wall **26** of the base end cap **14** defines the bottom wall of the container **10** and the top wall and the top wall **60** of the top end cap **16** defines the top wall of the container **10.** Further, in the exemplary embodiment, the outer surfaces of portions of the walls of the lower and upper support structures **28, 62** are in flat face contact with the inside surfaces of portions of the walls of the tubular sleeve **12** for structural purposes.

Referring to **FIGs. 1****,** as the container **10** is fully assembled, the upper support structure **62** supports a top edge of each disc **32** and the lower support structure **28** supports a bottom edge of each disc **32** to support and position each disc **32.** Specifically, a top edge of each disc **32** is supported between two peaks **78** of the fin **76,** and a bottom edge of each disc **32** is supported by a groove 44. Thereby, the upper and lower support structures **28, 62** provide means for supporting the discs **32.**

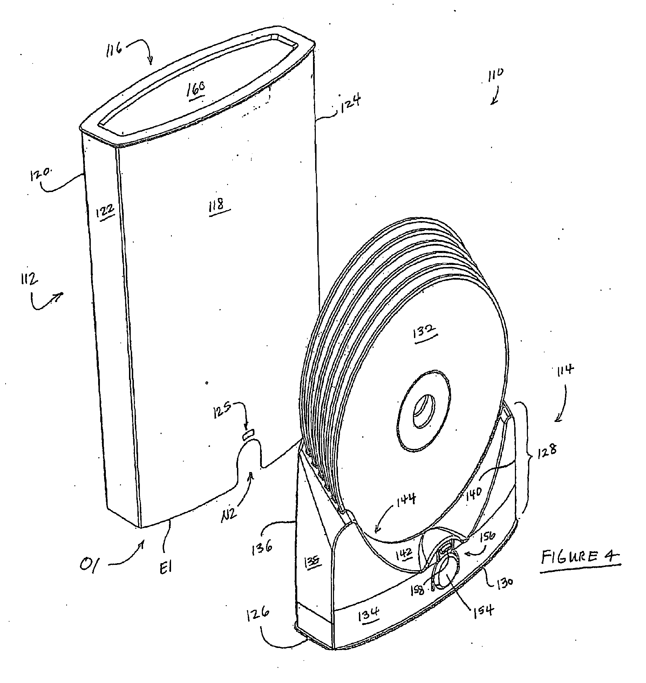

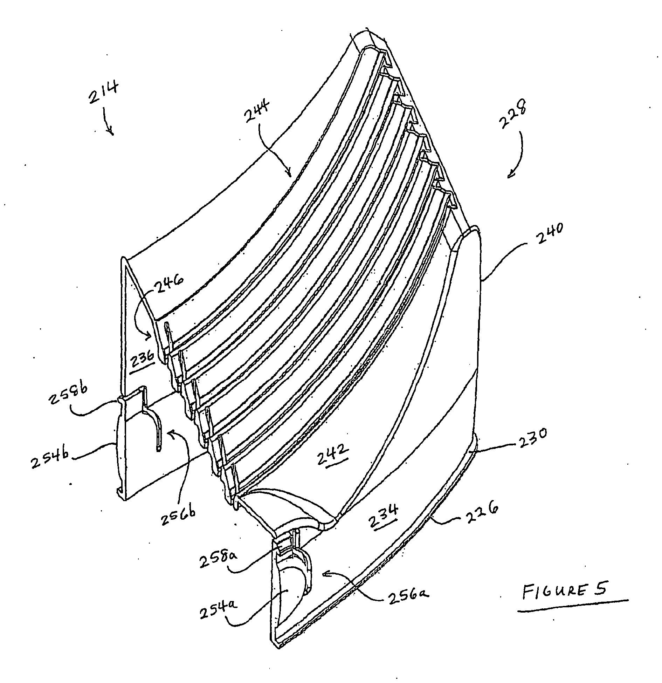

Regarding the numeric designation of elements in **FIGs. 4** and **5****,** the elements in **FIGs. 4** and **5** are designated with element numbers that are similar to those used in **FIGs. 1-3** for similar elements, except that the numeric prefix of "1 or "2" has been added.

It should be noted that means for supporting is not limited to the illustrated lower and upper support structures. In an alternative embodiment illustrated in **FIG. 4****,** means for supporting is the lower support structure **114** without an upper support structure. In other alternative embodiments, the lower support structure **128** can include one or more fins in addition to, or in place of, the grooves. Further, means for supporting is not limited to the top and base end caps. In certain embodiments, the tubular sleeve includes support structures that extend inwardly from the walls of the tubular steeve.

It should be understood that means for releasably locking is not limited to the elements, the position of the elements, the number of elements, or the arrangement of elements that are illustrated in the exemplary embodiment. In an alternative embodiment illustrated in **FIG. 4****,** a container **110** includes a tubular sleeve **112,** a base end cap **114,** and means for releasably securing the base end cap **114** to the tubular sleeve **112.** In this embodiment, means for releasably securing includes a notch **N2** and a slot or aperture **125** that are disposed in the tubular sleeve **112,** and a cantilever **156** that includes a push button **154** and a detent **158** that is disposed in a wall of the base end cap **114.**

The notch **N2** is disposed along the lower edge E1 of the tubular sleeve **112** and the aperture **125** is disposed adjacent to and aligned with the notch **N2.** The notch **N2** and the aperture **125** are positioned in the front wall **118** of the tubular sleeve **112.**

The cantilever **156** is defined in the front wall **134** of the base end cap **114** by a cut line. The push button **154** is disposed at the proximal or supported end of the cantilever **156** and the detent **158** is disposed and the distal or free end of the cantilever **156.**

The base end cap **114** can be received at or in an open end **01** of the tubular sleeve **112** according to a method similar to that described above to assemble the container **10.** As the tubular sleeve **112** slides over the base end cap **114,** the portion of the tubular sleeve **112** that is between the notch **N2** and the aperture **125** contacts the detent **158** to deflect the cantilever **156** such that the detent does not obstruct the tubular sleeve **112.** Alternatively, the push button **154** can be pressed to deflect the cantilever **156.** Thereafter, the detent **158** aligns with and is received in the aperture **125** and the push button **154** aligns with the notch **N2.** Specifically, as the base end cap **114** is substantially fully received by the tubular sleeve **112,** the deflected cantilever **156** returns to its substantially undeflected position, to force the detent **158** into the aperture **125.** The notch **N2** is designed to receive the push button **154** as the tubular sleeve **112** slides over the base end cap **114,** such that the push button **154** can protrude from the base end cap **114** without obstructing the tubular sleeve **112.** The tubular sleeve **112** can be released and separated from the base end cap **114** by simultaneously depressing the push button **154** to deflect the cantilever **156,** thereby releasing the detent **158** from the aperture **125,** and sliding the tubular sleeve **112** from the base end cap **114.**

Means for releasably locking the tubular sleeve **112** to the base end cap **114** is not limited to the positions described above. For example, referring to the alternative embodiment illustrated in **FIG. 5****,** elements of the lock and release mechanism are disposed in each of the front and back wall a base end cap **214** and in respective front and back walls of a tubular sleeve (not shown). In additional alternative embodiments, elements of a lock and release mechanism are disposed in one or each of the side walls of a base end cap and of a tubular sleeve. Stilt other positions may be preferable depending on other aspects of the containers, such as graphics printed on the tubular sleeve that may or may not be designed to interact with the lock and release mechanism.

The law does not require and it is economically prohibitive to illustrate and teach every possible embodiment of the present claims. Hence, the above-described embodiments are merely exemplary illustrations of implementations set forth for a clear understanding of the principles of the invention. Variations, modifications, and combinations may be made to the above-described embodiments without departing from the scope of the claims. All such variations, modifications, and combinations are included herein by the scope of this disclosure and the following claims.

## Claims

1. An apparatus (10) for holding at least one article, comprising: a sleeve (12, 112); a top (16, 116) located at one end of said sleeve (12; 112); a base (14, 114, 214) located at an end of said sleeve (12, 112) opposite said top; a locking mechanism (54, 56, 154, 156,158, 254, 256, 258) that releaseably engages said sleeve (12, 112) to said base (14, 114, 214); which base comprises a first support structure (28, 128, 228) comprising at least one article receiving recess (44, 144, 244) formed from a first wall and a second wall, connected to one another between adjacent first ends thereof, said first wall comprising a flexing arm (46, 246) **characterised in that** said flexing arm has a cantilever (48) that extends into the article receiving recess (44, 144, 244) to terminate in a free end proximate said first end of said first wall, the cantilever (48) being deflectable by the insertion of an article into the article receiving recess, and thereafter pressing a portion of that article against the second wall to retain that article in the article receiving recess.

2. The apparatus of claim 1, wherein said at least one article receiving recess (44; 144; 244) comprises two or more grooves that are evenly spaced along a sloping top wall of said base such that articles received in those recesses are held in a stepped fashion.

3. The apparatus of claim 1 or claim 2, further comprising a second support structure (62) extending from at least one of said top (16; 116) and said sleeve (12; 112), configured to contact said article at a second location, which second location is spaced from said first location.

4. The apparatus of claim 3, wherein said second support structure comprises a fin (76) that provides means for supporting said articles at said second location.

5. The apparatus of claim 4 wherein an edge of said fin comprises peaks and valleys (78) that are stepped so as to correspond to the grooves of claim 2.

6. The apparatus of claims 1 to 5, wherein said flexing arm (46; 246) is formed by a substantially U-shaped channel or cut extending through a side wall of said the or each article receiving recess.

7. The apparatus of claim 6 wherein said flexing arm comprises a detent (50) that contacts a surface of said article, when said article is inserted into the article receiving recess (44; 144; 244).

8. The apparatus of claims 1 to 7, wherein said article is a media disc, such as a CD or DVD, and wherein said arm contacts said surface at a non-optical portion of that disc, when present.

9. The apparatus of claims 1 to 8, wherein said sleeve (12; 112) further comprises an aperture (25; 125) that engages said locking mechanism (54, 56; 154, 156, 158; 254, 256, 258).

10. The apparatus of claims 1 to 9, wherein said base (14; 114; 124) comprises a cantilever (56; 156; 256) defined in a front wall (34; 134; 234) thereof which cantilever (56; 156; 256) comprises a detent (54; 154; 254) that is receivable within an aperture (25; 125; 225) formed in said sleeve (12; 112) thereby to releasably engage the sleeve (12; 112) and the base (14; 114; 124).

11. The apparatus of claims 1 to 10, wherein said first support structure (28; 128; 228) is loaded with one or more articles, and wherein said top (16; 116), sleeve (12; 112) and base (14; 114; 214) are engaged with one another to form a package.

12. A kit of parts for forming a package, which kit comprises: a sleeve (12; 112); a top locatable at one end of said sleeve (12; 112); a base (14; 114; 214) locatable at an end of said sleeve (12; 112) opposite said top (16; 116); a locking mechanism (54, 56; 154, 156, 158; 254, 256, 258) that is operable to releaseably engage said sleeve (12; 112) to said base (14; 114; 214); said base comprising a first support structure (28; 128; 228) comprising at least one article receiving recess (44; 144; 244), said first wall comprising a flexing arm (46, 246) **characterised in that** said flexing arm has a cantilever (48) that extends into the article receiving recess to terminate in a free end proximate said first end of said first wall, the cantilever being deflectable by the insertion of an article into the article receiving recess, and thereafter pressing a portion of that article against the second wall to retain that article in the article receiving recess.

## Patentansprüche

1. Vorrichtung (10) zum Halten wenigstens eines Gegenstands, umfassend: eine Hülse (12; 112); eine Oberseite (16; 116), die an einem Ende der Hülse (12; 112) angeordnet ist; eine Basis (14; 114; 214), die an einem Ende der Hülse (12; 112) gegenüber der Oberseite angeordnet ist; einen Verriegelungsmechanismus (54, 56; 154, 156, 158; 254, 256, 258), der die Hülse (12; 112) mit der Basis (14; 114; 214) lösbar in Eingriff nimmt; wobei die Basis eine erste Stützstruktur (28; 128; 228) umfasst, die wenigstens eine Gegenstands-Aufnahmeausnehmung (44; 144; 244) umfasst, die von einer ersten Wandfläche und einer zweiten Wandfläche ausgebildet wird, die zwischen jeweils benachbarten ersten Enden miteinander verbunden sind, wobei die erste Wandfläche einen biegsamen Arm (46; 246) umfasst, **dadurch gekennzeichnet dass**, der biegsame Arm einen Ausleger (48) aufweist, der sich in die Gegenstands-Aufnahmeausnehmung (44; 144; 244) erstreckt, um in einem freien Ende zu enden, das proximal zu dem ersten Ende der ersten Wandfläche ist, und wobei der Ausleger (48) durch Einsetzen eines Gegenstands in die Gegenstands-Aufnahmeausnehmung auslenkbar ist, und danach einen Abschnitt des Gegenstands gegen die zweite Wandfläche presst, um den Gegenstand in der Gegenstands-Aufnahmeausnehmung zu halten.

2. Vorrichtung gemäß Anspruch 1, wobei wenigstens eine Gegenstands-Aufnahmeausnehmung (44; 144; 244) zwei oder mehrere Nuten umfasst, die gleichmäßig entlang einer geneigten oberen Wandfläche der Basis beabstandet sind, derart, dass Gegenstände in den Ausnehmungen in einer abgestuften Weise gehalten werden.

3. Vorrichtung gemäß Anspruch 1 oder Anspruch 2, die ferner eine zweite Stützstruktur (62) umfasst, die sich entweder von der Oberseite (16; 116) oder der Hülse (12; 112) erstreckt, und die so konfiguriert ist, um den Gegenstand an einer zweiten Position zu kontaktieren, wobei die zweite Position von der ersten Position beabstandet ist.

4. Vorrichtung gemäß Anspruch 3, wobei die zweite Stützstruktur eine Rippe (76) umfasst, die Mittel zum Stützen der Gegenstände an der zweiten Position bereit stellt.

5. Vorrichtung gemäß Anspruch 4, wobei eine Kante der Rippe Spitzen und Täler (78) umfasst, die so abgestuft sind, um mit den Nuten nach Anspruch 2 zu korrespondieren.

6. Vorrichtung gemäß den Ansprüchen 1 bis 5, wobei der biegsame Arm (46; 246) durch einen im Wesentlichen U-förmigen Kanal oder durch einen Schnitt ausgebildet wird, der sich durch eine Seitenwandfläche der Gegenstands-Aufnahmeausnehmung bzw. jeder Gegenstands-Aufnahmeausnehmung erstreckt.

7. Vorrichtung gemäß Anspruch 6, wobei die biegsame Arm eine Arretierung (50) umfasst, die eine Fläche des Gegenstands kontaktiert, wenn der Gegenstand in die Gegenstands-Aufnahmeausnehmung (44; 144; 244) eingeführt wird.

8. Vorrichtung gemäß den Ansprüchen 1 bis 7, wobei der Gegenstand ein Platten-Speichermedium, wie eine CD oder DVD ist, und wobei der Arm die Oberfläche an einem nicht-optischen Abschnitt der Platte kontaktiert.

9. Vorrichtung gemäß den Ansprüchen 1 bis 8, wobei die Hülse (12; 112) ferner eine Öffnung (25; 125) umfasst, die den Verriegelungsmechanismus in Eingriff (54, 56; 154, 156, 158; 254, 256, 258) nimmt.

10. Vorrichtung gemäß den Ansprüchen 1 bis 9, wobei die Basis (14; 114; 124) einen Ausleger (56; 156; 256) umfasst, der in einer ihrer vorderen Wandflächen (34; 134; 234) definiert ist, wobei der Ausleger (56; 156; 256) eine Arretierung (54; 154; 254) umfasst, die in einer in der Hülse (12; 112) ausgebildeten Öffnung (25; 125; 225) ausgebildet ist, aufgenommen werden kann, um dadurch die Hülse (12; 112) und die Basis (14; 114; 124) lösbar in Eingriff zu nehmen.

11. Vorrichtung gemäß den Ansprüchen 1 bis 10, wobei die erste Stützstruktur (28; 128; 228) mit einem oder mehreren Gegenständen bestückt wird, und wobei die Oberseite (16; 116), die Hülse (12; 112) und die Basis (14; 114; 214) miteinander zum Ausbilden einer Verpackung in Eingriff sind.

12. Bausatz zum Ausbilden einer Verpackung, wobei der Bausatz umfasst: eine Hülse (12; 112); eine Oberseite, die an einem Ende der Hülse (12; 112) angeordnet werden kann; eine Basis (14; 114; 214), die an einem Ende der Hülse (12; 112) gegenüber der Oberseite (16, 116) angeordnet werden kann; ein Verriegelungsmechanismus (54, 56; 154, 156, 158; 254, 256, 258), der betätigbar ist, um die Hülse (12; 112) mit der Basis (14; 114; 214) lösbar in Eingriff zu nehmen; wobei die Basis eine erste Stützstruktur (28; 128; 228) umfasst, die wenigstens eine Gegenstands-Aufnahmeausnehmung (44; 144; 244) umfasst, wobei die erste Wandfläche einen biegsamen Arm (46; 246) umfasst, **dadurch gekennzeichnet, dass** der biegsame Arm einen Ausleger (48) aufweist, der sich in die Gegenstands-Aufnahmeausnehmung erstreckt, um in einem freien Ende nahe des ersten Endes der ersten Wandfläche zu enden, wobei der Ausleger durch das Einsetzen eines Gegenstands in die Gegenstands-Aufnahmeausnehmung auslenkbar ist und danach einen Abschnitt des Gegenstands gegen die zweite Wand drückt, um den Gegenstand in der Gegenstands-Aufnahmeausnehmung zu halten.

## Revendications

1. Dispositif (10) destiné à contenir au moins un article, comprenant : un boîtier (12, 112) ; un couvercle (16, 116) situé à une extrémité dudit boîtier (12, 112) ; une base (14, 1 14, 214) située à une extrémité dudit boîtier (12, 112) opposée audit couvercle ; un mécanisme de verrouillage (54, 56, 154, 156, 158, 254, 256, 258) qui met en prise de manière libérable ledit boîtier (12, 112) avec ladite base (14, 114, 214) ; laquelle base comprend une première structure de support (28, 128, 228) comprenant au moins un évidement recevant un article (44, 144, 244) formé à partir d'une première paroi et d'une deuxième paroi, connectées l'une à l'autre entre des premières extrémités adjacentes de celles-ci, ladite première paroi comprenant un bras flexible (46, 246), **caractérisé en ce que** ledit bras flexible a un porte-à-faux (48) qui s'étend dans l'évidement recevant un article (44, 144, 244) pour se terminer par une extrémité libre à proximité de ladite première extrémité de la première paroi, le porte-à-faux (48) pouvant être dévié par l'insertion d'un article dans l'évidement recevant un article, et poussant ensuite une partie de cet article contre la deuxième paroi pour retenir cet article dans l'évidement recevant un article.

2. Dispositif selon la revendication 1, dans lequel ledit au moins un évidement recevant un article (44 ; 144 ; 244) comprend deux rainures ou plus qui sont espacées régulièrement le long d'une paroi supérieure inclinée de ladite base de telle manière que des articles logés dans ces évidements sont retenus de façon étagée.

3. Dispositif selon la revendication 1 ou 2, comprenant en outre une deuxième structure de support (62) s'étendant depuis au moins l'un desdits couvercle (16 ; 116) et boîtier (12 ; 112), configurée pour entrer en contact avec ledit article en un deuxième endroit, lequel deuxième endroit est distant dudit premier endroit.

4. Dispositif selon la revendication 3, dans lequel ladite deuxième structure de support comprend une ailette (76) qui constitue un moyen pour supporter lesdits articles audit deuxième endroit.

5. Dispositif selon la revendication 4, dans lequel un bord de ladite ailette comprend des sommets et des creux (78) qui sont étagés de façon à correspondre aux rainures de la revendication 2.

6. Dispositif selon les revendications 1 à 5, dans lequel ledit bras flexible (46 ; 246) est formé par un canal ou entaille substantiellement en forme de U s'étendant dans une paroi latérale dudit ou de chaque évidement recevant un article.

7. Dispositif selon la revendication 6, dans lequel ledit bras flexible comprend un cran (50) qui entre en contact avec une surface dudit article, quand ledit article est inséré dans l'évidement recevant un article (44 ; 144 ; 244).

8. Dispositif selon les revendications 1 à 7, dans lequel ledit article est un disque multimédia, comme un CD ou un DVD, et dans lequel ledit bras entre en contact avec ladite surface dans une partie non optique de ce disque, quand elle est présente.

9. Dispositif selon les revendications 1 à 8, dans lequel ledit boîtier (12 ; 112) comprend en outre une ouverture (25 ; 125) qui se met en prise avec ledit mécanisme de verrouillage (54, 56 ; 154, 156, 158 ; 254, 256, 258).

10. Dispositif selon les revendications 1 à 9, dans lequel ladite base (14 ; 114 ; 214) comprend un porte-à-faux (56 ; 156 ; 256) défini dans une paroi avant (34 ; 134 ; 234) de celle-ci, lequel porte-à-faux (56 ; 156 ; 256) comprend un cran (54 ; 154 ; 254) qui peut être reçu dans une ouverture (25 ; 125 ; 225) formée dans ledit boîtier (12 ; 112) afin de mettre en prise de façon libérable le boîtier (12 ; 112) avec la base (14 ; 114 ; 124).

11. Dispositif selon les revendications 1 à 10, dans lequel ladite première structure de support (28 ; 128 ; 228) est chargée avec un ou plusieurs articles, et dans lequel ledit couvercle (16 ; 116), ledit boîtier (12 ; 112) et ladite base (14 ; 114 ; 124) sont en prise les uns avec les autres pour former un emballage.

12. Ensemble de pièces destinées à former un emballage, lequel ensemble comprend : un boîtier (12 ; 112) ; un couvercle pouvant être placé à une extrémité dudit boîtier (12 ; 112) ; une base (14 ; 114 ; 214) pouvant être placée à une extrémité dudit boîtier (12 ; 112) opposée audit couvercle (16 ; 116) ; un mécanisme de verrouillage (54, 56 ; 154, 156, 158 ; 254, 256, 258) qui peut être actionné pour mettre en prise de manière libérable ledit boîtier (12 ; 112) avec ladite base (14 ; 114 ; 214) ; ladite base comprenant une première structure de support (28 ; 128 ; 228) comprenant au moins un évidement recevant un article (44 ; 144 ; 244), ladite première paroi comprenant un bras flexible (46, 246), **caractérisé en ce que** ledit bras flexible a un porte-à-faux (48) qui s'étend dans l'évidement recevant un article pour se terminer par une extrémité libre à proximité de ladite première extrémité de la première paroi, le porte-à-faux pouvant être dévié par l'insertion d'un article dans l'évidement recevant un article, et poussant ensuite une partie de cet article contre la deuxième paroi pour retenir cet article dans l'évidement recevant un article.
